# EUROPEAN PATENT SPECIFICATION

(11) **EP 2 733 090 B1**
(45) Date of publication and mention of the grant of the patent: **09.09.2020**
(21) Application number: 13192624.8
(22) Date of filing: 13.11.2013
(51) Int. Cl.: B65G 1/137

(54) **Method for automated loading of products from a warehouse onto a carrier**
Verfahren zum Beladen von Trägern mit Lagergütern
Procédé de chargement de produits d'un magasin sur un support

(30) Priority: 14.11.2012 NL 2009808
(43) Date of publication of application: 21.05.2014
(73) Proprietor: Vanderlande Industries B.V., 5466 RB Veghel (NL)
(72) Inventor: Dumoulin, Bastiaan Maria Ludovicus, 5247 WT ROSMALEN (NL)
(74) Representative: Algemeen Octrooi- en Merkenbureau B.V.

(56) References cited:
- EP-A1- 1 743 852
- EP-A1- 1 760 012
- US-A- 4 692 876

## Description

The present invention relates to a method for automated loading of products from a warehouse onto a carrier at a collecting location in accordance with collecting orders.

From EP 1 698 573 B1 there is known a method for automated loading of articles from a warehouse onto order pallets in accordance with a collecting order. Prior to the loading of the order pallets, a specific loading sequence of the articles onto an order pallet is determined by a control system on the basis of a desired spatial pattern in which the articles are to be loaded on the order pallet. Supplying the products to the order pallets takes place in that specific order. This makes heavy demands on the logistic process upstream of the order pallets, not in the last place in particular if the products to be collected are stored in different racks in a warehouse, as is usually the case. In order to realise the desired order, the aforesaid publication also suggests the possibility to introduce an additional sorting step between the warehouse and the order pallets. To that end the required facilities need to be available, of course.

The object of the present invention is to lower the requirements made of the logistic process and/or the logistic facilities and nevertheless make automated collection of products in a desired spatial pattern on a carrier possible. In order to achieve that object, the invention provides a method according to claim 1.

The invention is based on the inventive perception that the desired loading pattern makes demands on the order in which products are to be supplied to the collecting location, to be true, but that said requirements do not go so far that there is only one specific order in which the products are to be supplied to the collecting location so as to be able to realise the desired loading pattern. The present invention utilizes the scope that exists for determining the loading sequence of a carrier without making it impossible to load the carrier in accordance with the desired pattern. The products to be loaded are to that end subdivided into groups. The supply of products to a collecting location takes place in successive groups and the order of products within said groups is no longer relevant. As a result, the actual loading sequence will generally be different from the hypothetical loading sequence, but the desired loading platform is nevertheless realised.

In practice, various spatial patterns may in principle be acceptable and serve as a desired spatial pattern. This fact can be usefully utilised by selecting a spatial pattern as the desired spatial pattern in which the associated loading sequence comprises the smallest number of groups. Within this framework, with a view to determining by the control means the desired spatial pattern according to step A, the method according to the invention may comprise the steps of
A1 determining by the control means respective hypothetical loading sequences for a number of possible desired spatial patterns,
A2 determining by the control means the number of groups per hypothetical loading sequence for each of the respective hypothetical loading sequences,
A3 selecting by the control means a possible desired spatial pattern with which a hypothetical loading sequence comprising the lowest number of groups is associated as the desired spatial pattern.

In order to attain a further optimisation, it is preferable if, with a view to determining by the control means the hypothetical loading sequence according to step B, the method comprises the following steps
B1 determining by the control means the number of groups per respective possible loading sequence for a number of possible loading sequences which are each suitable for obtaining the desired spatial pattern, and
B2 selecting by the control means a possible loading sequence comprising the lowest number of groups as the hypothetical loading sequence.
   The smaller the number of groups, the larger the average number of products per group will be, resulting in a greater freedom as regards the order in which the products can be supplied to the collecting location and be loaded onto a carrier.

The advantages of the invention can be achieved in particular, but not exclusively, if the loading means is a robot, preferably a six-axis robot. Such a manipulator is characterised by a great manoeuvrability, which makes it possible to work with relatively large groups.

A greater degree of freedom regarding the order in which products can be removed from the warehouse can be obtained if the products pass a buffer device between the warehouse and the collecting location during the execution of step D, at which buffer device the order in which the products are supplied from the warehouse to the buffer device is adapted by the buffer device, if necessary, such that the products in the successive groups as determined in step C are supplied from the buffer device to the collecting location. This is necessary if the products are discharged from the warehouse in the direction of the collecting location in an order such that there is no question of the successive groups of products as determined in step C. The buffer device will correct the order in that situation. The advantage of using a buffer device is that less stringent requirements can be made of the warehouse, both as regards the control thereof and as regards the hardware thereof. Precisely because the invention does not require the products to be supplied to the collecting location in a specific order but, on the contrary, provides a comparatively great degree of freedom as regards the order in which the products are to be supplied to the collecting liquidation, viz. provided that the correct order of groups is used, the required capacity of the buffer device is comparatively limited as well.

In general, the invention can be used advantageously if, during the execution of step E, the loading means move each product in horizontal direction to the position of the respective product in the desired spatial pattern.

The invention will now be explained by means of a description of a non-limitative preferred embodiment of the invention with reference to the following figures:
Figure 1 is a schematic top plan view of a system by means of which the method according to the invention can be carried out;
Figures 2-4 are schematic top plan views of a carrier, in which possible loading sequences for 16 products are indicated in numerals.

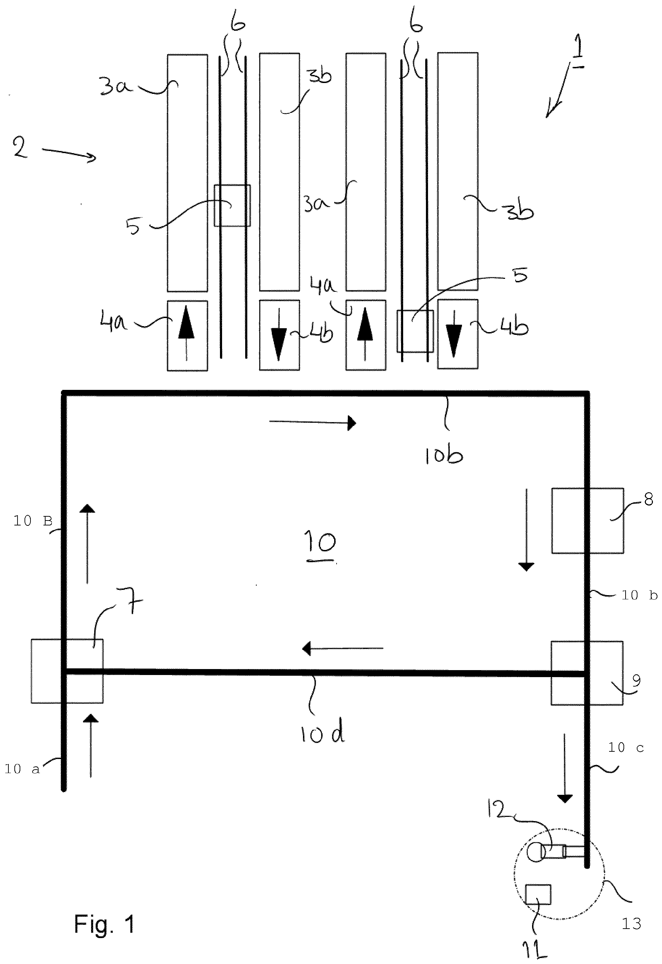

Figure 1 shows an automated storage system 1. The system 1 comprises a warehouse 2. The warehouse 2 comprises a number of racks 3a, 3b disposed beside and parallel to each other, four of which are shown in figure 1. Each of the racks 3a, 3b comprises a number of rack positions arranged beside and above each other. Each of these rack positions is designed for accommodating trays on which one product or a number of products may be present. The racks 3a, 3b are arranged in pairs. A supply station 4a is provided at an end side of the racks 3a, whilst a discharge station 4b is provided at an end side of the rack 3b, opposite the supply station 4a. Rails 6 extend between racks 3a and 3b of a pair and also between the associated supply and discharge stations 4a and 4b, respectively, over which rails a crane 5 can move forward and backward. The crane 5 is designed for picking up trays from the supply station 4a and subsequently storing them in one of the racks 3a, 3b, and for removing trays from the racks 3a, 3b and subsequently delivering them to the discharge station 4b.

The system 1 further comprises a conveyor 10. The conveyor 10 comprises conveying parts 10a, 10b, 10c, 10d. The conveying parts 10b and 10d are designed for conveying trays, on which one product or a number of products may be present. The conveyor 10 may to that end be configured as a roller conveyor or a double belt conveyor, for example, at the location of the conveying parts 10b and 20d. At the location of the conveying parts 10a and 10c, the conveyor 10 is designed for conveying products. The conveyor at 10 may for example be configured as a belt conveyor at the location of the conveying parts 10a and 10c.

At the location of the junction where the conveying parts 10a, 10b and 10d converge, the system 1 comprises a device 7 as known per se for loading trays with products. At the location of the junction between the conveying parts 10b, 10c and 10d, the system comprises a device 9 as known per se for unloading trays.

Between the warehouse 2 and the unloading device 9, the system 1 further comprises a buffer device 8, past which trays carrying products are conveyed on the conveying part 10b by the conveyor 10. Such a buffer device may also be configured essentially as described in European patent application EP 860 382.

The system 1 further comprises a collecting location 13 at the downstream end of the conveying part 10c. A manipulator 12 configured as a six-axis pick-and-place robot is provided at the loading location 13, which manipulator has a working range such that it can pick up products from the downstream end of the conveying part 10c and place them onto a carrier 11 at a desired position for loading the same.

The system 1 is operated as follows: products are individually supplied to the loading device 7 via the conveying part 10a of the conveyor 10. Unloading of pallets carrying the products in question as well as individualization and (if necessary) reorientation of the products in question may to that end already have taken place upstream of the part of the conveying part 10a that is shown in figure 1.

The loading device 7 subsequently causes the products in question to be loaded onto a tray. Empty trays are to that end supplied to the loading device 7 via the conveying part 10d of the conveyor 10.

The conveyor 10 conveys the products, loaded on a tray as described above, further by means of the conveying part 10b. The products are intended for initial storage in the warehouse 2.

The control system (not shown) of the system 1 to that end reserves a rack position in one of the racks 3a, 3b for each product that is supplied to the warehouse 2 by means of the conveyor 10. The tray carrying the product in question is transferred from the conveying part 10b to the supply station 4a for storage of the product, with the reserved rack position being located in one of the associated racks 3a, 3b. The tray carrying the product in question is then picked up by the crane 5 of the supply station 4a and, after the crane 5 has been moved over the rails 6, stored in the reserved rack position.

The control system of the system 1 further receives, in accordance with collecting orders to that effect, commands to collect products stored in the warehouse 2 on a carrier 11. Generally the group of products associated with a collecting order will to that end have to be collected in several layers on the carrier 11. Various criteria can play a part in determining the spatial pattern in which the carrier 11 is to be loaded with products, the so-called desired spatial pattern. Think in this connection for example of the requirement to load relatively heavy products in the lowermost layer or at least one of the lower layers and to fill the space above the carrier 11 as completely as possible, and/or to take the manner in which the carrier 11 is to be eventually unloaded into account already upon loading a carrier 11. On the basis of these criteria the desired spatial pattern is determined by the control system of the system 1. The result of this must be, therefore, that the products on the carrier 11 are collected in accordance with this desired spatial pattern.

As a next step, the control system determines a so-called hypothetical loading sequence. This is the order or at least an order in which the products could be loaded onto the carrier so as to obtain the desired spatial pattern. Such a hypothetical loading sequence can be effectively obtained by, starting from a carrier that has been calculated in accordance with the desired spatial pattern, unloading this carrier in a specific order and subsequently using the reverse order. The hypothetical loading sequence will in part dependent on the type of manipulator 12 that is used, including the associated gripper of the manipulator. Such a gripper might thus be designed for clampingly engaging a product on opposite upright sides of the product, for example, or for engaging a product from above by means of a suction nozzle.

After the hypothetical loading sequence has been determined, the successive products within the hypothetical loading sequence are subsequently divided into successive groups of products by the control system. The size of each group is limited because the addition to the group in question of a next product could mean that when the carrier is loaded in random order with products belonging to the group in question, including the next product, at least one product belonging to the group in question cannot be loaded onto the carrier 11 on account of the carrier having previously been loaded with the aforesaid next product. This manner of dividing will be explained in more detail by means of a number of examples. For a clear understanding it is assumed for the sake of convenience that the loading of the carrier 11 only needs to take place in one layer. It will be apparent to the skilled person, or at least become apparent upon reading the following, that the underlying principle can also be excellently used if the loading of the carrier 11 is to take place in several layers, as will generally be the case in practice, or that such layers are even no longer recognisable in the spatial pattern.

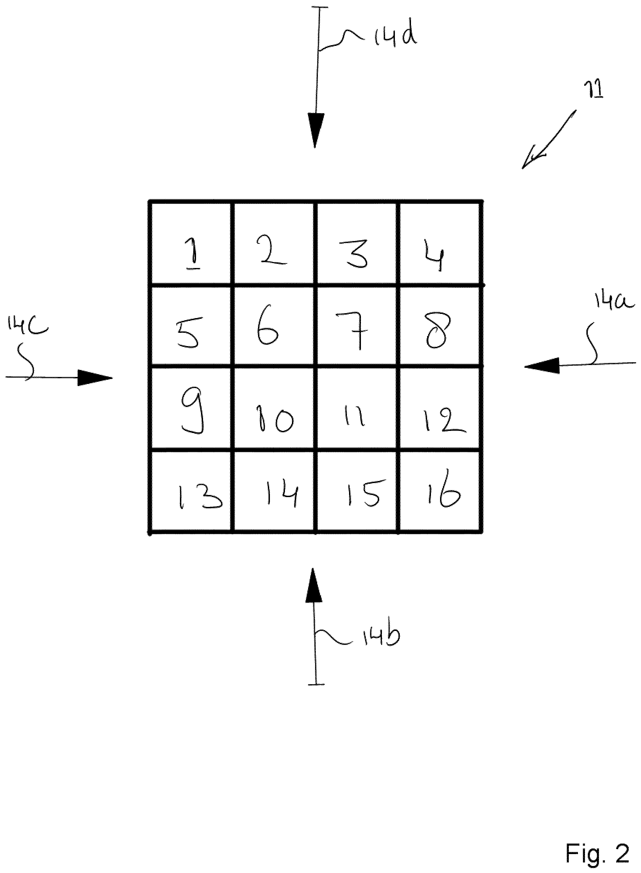

Figure 2 schematically shows the carrier 11 that is loaded with (one layer of) sixteen products of identical dimensions. The loading of the carrier 11 by the robot 12 can take place from four sides, exclusively in the horizontal directions indicated by arrows 14a, 14b, 14c, 14d. Loading cannot take place from above in a direction perpendicular to the plane of drawing, for example. This implies, for example, that in the case where the products indicated by numerals 2, 5, 7 and 10 should already be loaded, it is no longer possible to load the product indicated at 6 by means of the robot 12.

Hereinafter it is assumed that the sequence 1-16 as indicated in figure 2 has already been determined as the hypothetical loading sequence by the control system at a prior stage. It is hypothetically assumed, therefore, that the loading of the carrier 11 will take place in the order indicated by the numerals so as to thus obtain the desired spatial pattern. In order to be able the carrier 11 in that specific order, it would be necessary to ensure that the products are also supplied to the collecting location 13 in that order. The invention is based on the perception that products can also be supplied in a different order without rendering it impossible to realise the desired spatial pattern.

In order to utilise the scope that exists, the control system makes a division into successive groups of successive products within the hypothetical loading sequence. The first group is started with product 1 and subsequently a next product keeps being added to this first group keeps. In doing so, the control system constantly asks itself whether the addition to the group of a next product could impede the loading of one of the products of a group if the products of that group were to be loaded in random order in accordance with the desired spatial pattern. The impediment in this case consists in the fact that it is not possible to get to the position of the product in question according to the desired spatial pattern because other products previously loaded onto the carrier block access to the position in question. If such a potential impediment exists, the group size is determined to be the maximum size at which such a potential impediment does not exist yet. Thus it can be established that the first group comprises products 1 - 9. After all, the result of the addition of product 10 to the first group might be (this does not necessarily have to be case, therefore) that, as already indicated in a preceding example, product 6 could no longer be loaded if, prior thereto, products 2, 5, 7 and 10 would already have been loaded. Put differently, this means that no matter in what order the robot 12 loads the products 1 - 9 of the first group in accordance with the desired spatial pattern, loading of all the products of the group will be possible at all times.

After the size of the first group has been determined, viz. products 1 - 9, the control system will put together the next, second group in the same manner. The second group comprises products 10 - 13. After all, if the second group would also comprise product 14, it would no longer be possible to load product 10 if products 11 and 14 would already have been loaded, given the fact that because of the prior loading of the products of the first group, products 6 and 9 would by definition already have been loaded as well. The third and last group will then comprise products 14 - 16. In total, the control system thus divides the successive products 1 - 16 into three groups: a first group comprising products 1 - 9, a second group comprising products 10 - 13 and a third group comprising products 14 - 16.

After the control system has completed this division into groups, the control system will arrange for the first, the second and the third group to be successively supplied to the collecting location 13. The order of the products within those three groups is no longer relevant, since it has been determined, on account of the above-described analysis, that it would at all times be possible for the robot 12 to load the carrier 11 in accordance with the desired spatial pattern, independently of the order in which products within a particular group are supplied to the collecting location 13. It is only relevant in that regard that the products of the first group, the second group and the third group are supplied to the collecting location in succession. The control system to that end delivers control signals to the warehouse 2, more specifically in particular to the cranes 5 thereof, to collect the successive groups of product in the correct order. The products in question are picked up by the cranes 5 from a rack position of one of the racks 3a, 3b and subsequently transferred to a discharge station 4, which then transfers the products, which are still present on a tray for that matter, to the conveying part 10b for transport of the tray-product combination to the unloading device 9. At the unloading device, the products are removed from the tray, whereupon the empty trays are discharged in the direction of the unloading device 7 via the conveying part 10d. The products themselves are supplied from the unloading device 9, via the conveying part 10c of the conveyor 10, to the collecting location 13, where the robot 12 will load the products onto the carrier 11 in the order of arrival at the collecting location 13, thereby realising the desired spatial pattern. There is a good chance that the order in which products are thus loaded onto the carrier 11 will be different from the hypothetical loading sequence.

In order to effect that complete groups of products are supplied to the collecting location 13 in the correct order, it is optionally also conceivable within the framework of the invention to make use of a buffer device 8 that is capable of adapting the order of the products on the conveying part 10b, if necessary. In that case less stringent requirements might be made of the warehouse 2, both as regards the control thereof and as regards the hardware thereof. Also the capacity requirements made of the buffer device 8 are comparatively limited, since there is a relatively great freedom as regards the order in which the products are supplied from the buffer device to the collecting location 13.

Once the carrier 11 is fully loaded in accordance with the desired spatial pattern, it will be discharged by discharge means (not shown), and supply means (not shown) will supply a new empty carrier to the collecting location 13 for being loaded with products in accordance with a next collecting order.

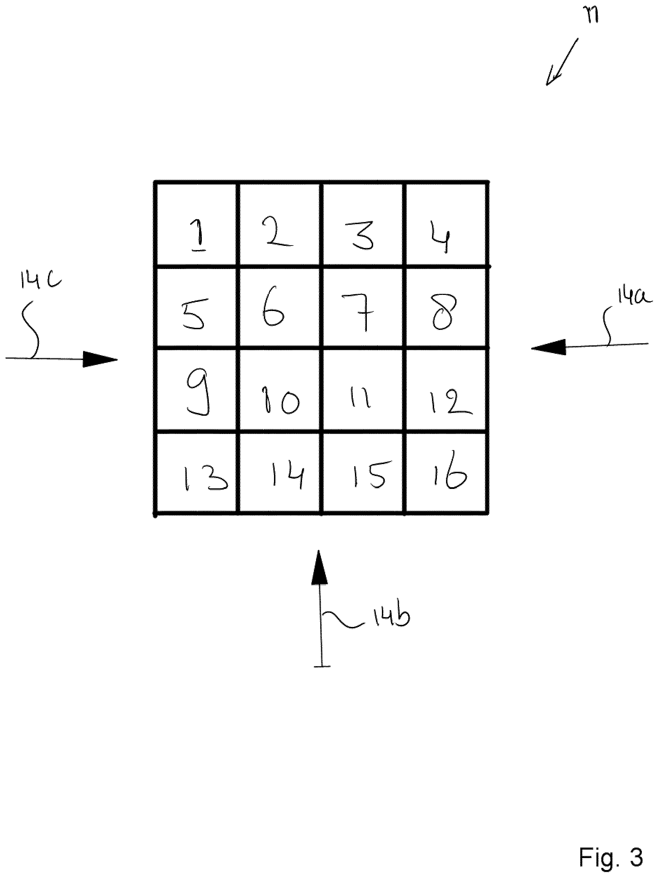

Figure 3 shows how the composition of the groups can be influenced if, for example on account of a limited working range of the manipulator, such as the robot 6, the carrier 11 can only be reached from three sides in the three directions 14a, 14b, 14c and no longer from a fourth side in the direction 14d, as is the case in the situation shown in figure 2. In order to be able to guarantee the desired spatial pattern, using the same hypothetical loading sequence, four successive groups must now be defined, viz. a first group comprising products 1 - 5, a second group comprising products 6 - 9, a third group comprising products 10 - 13, and a fourth group comprising products 14 - 16. It thus appears that the number of possible loading directions are available in the automatic loading of a carrier 11 has a direct influence on the freedom that exists as regards the order in which the products 1 - 16 are supplied to the collecting location 13. The requirements regarding the sequence in which the products are supplied to the collecting location become more stringent as the number of possible directions for loading the carrier 11 decreases.

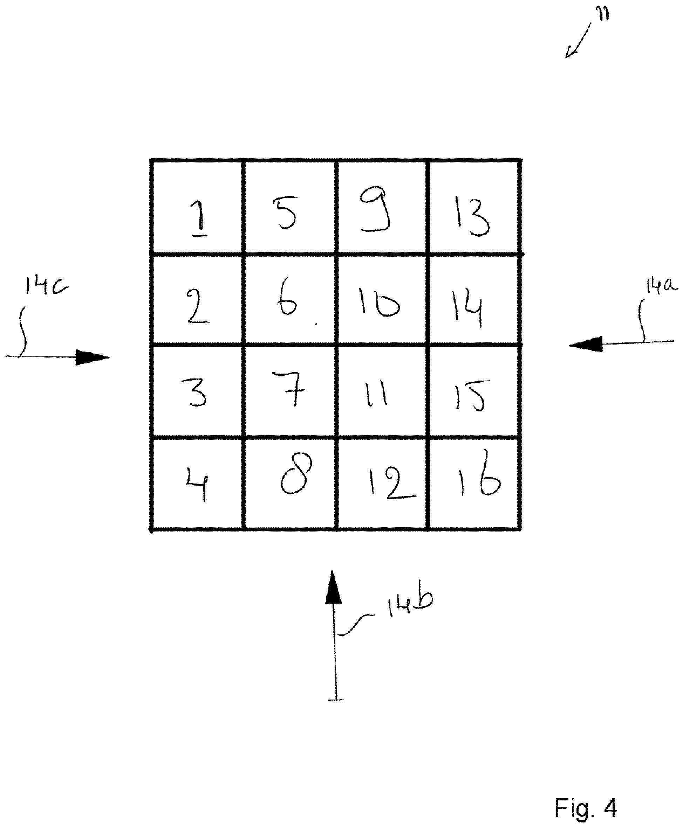

Figure 4, to conclude, shows that by determining a different desired spatial pattern and, connected therewith, a different hypothetical loading sequence, a smaller number of groups may be defined by the control system. In the situation shown in figure 1, the first group comprises products 1 - 8, the second group comprises products 9 - 12 and the third group comprises products 13 - 16.

The scope of the present invention is not limited to the above-described embodiments of the method according to the invention, but it is determined by the appended claims. In a variant, for example, it would be possible not to use trays or a buffer device.

## Claims

1. A method for automated loading of products from a warehouse (2) onto a carrier (11) in accordance with collecting orders each comprising products of different types, with a system (1) comprising a warehouse (2) for accommodating products in rack positions thereof, a collecting location (13), conveying means (5, 10) for conveying products from a rack position to the collecting location (13), loading means (12) for loading a carrier (11) at the collecting station (13) and control means for controlling the conveying means (5, 10) and the loading means (12), comprising the steps of
A determining by control means a desired spatial pattern in which the products are to be collected on a carrier by the loading means, the desired spatial pattern comprising products which are arranged beside and above one another,
B determining by the control means a hypothetical loading sequence in which the products can be loaded onto the carrier (11) by the loading means so as to obtain the desired spatial pattern,
C dividing by the control means successive products within the hypothetical loading sequence into successive groups of products wherein at least one of said groups comprises products of different types, wherein the size of each group is limited such as not to allow that the addition to the group in question of the next product within the hypothetical loading sequence could mean that when the carrier (11) is loaded in random order with products belonging to the group in question, including the next product, in accordance with the desired spatial pattern by the loading means, at least one product belonging to the group in question cannot be loaded onto the carrier (11) by the loading means (12) on account of the carrier having previously been loaded with the aforesaid next product,
D controlling the conveying means (5, 15) with the control means to supply the successive groups from the warehouse (2) to the collecting location, wherein the order of the products within the associated group upon arrival at the collecting location (13) is random, and
E controlling the loading means (12) with the control means to load in an automated manner the product onto a carrier (11) in the order of arrival of products at the collecting location (13) by the loading means, thereby realising the desired spatial pattern.

2. A method according to claim 1, comprising, with a view to determining by the control means the desired spatial pattern according to step A, the steps of
A1 determining by the control means respective hypothetical loading sequences for a number of possible desired spatial patterns,
A2 determining by the control means the number of groups per hypothetical loading sequence for each of the respective hypothetical loading sequences,
A3 selecting by the control means a possible desired spatial pattern with which a hypothetical loading sequence comprising the lowest number of groups is associated as the desired spatial pattern.

3. A method according to claim 1 or 2, comprising, with a view to determining by the control means the hypothetical loading sequence according to step B, the steps of
B1 determining by the control means the number of groups per respective possible loading sequence for a number of possible loading sequences which are each suitable for obtaining the desired spatial pattern, and
B2 selecting by the control means a possible loading sequence comprising the lowest number of groups as the hypothetical loading sequence.

4. A method according to claim 1, 2 or 3, wherein the loading means (12) is a robot.

5. A method according to claim 4, wherein the robot is a six-axis robot (12).

6. A method according to any one of the preceding claims, wherein the products pass a buffer device (8) between the warehouse and the collecting location during the execution of step D, at which buffer device (8) the order in which the products are supplied from the warehouse to the buffer device (8) is adapted by the buffer device (8), if necessary, such that the products in the successive groups as determined in step C are supplied from the buffer device (8) to the collecting location (13).

7. A method according to any one of the preceding claims, wherein the loading means (12) move each product in horizontal direction to the position of the respective product in the desired spatial pattern during the execution of step E.

## Patentansprüche

1. Verfahren zum automatisierten Beladen von Trägern (11) mit Lagergütern (2) gemäß Kommissionieraufträgen, die jeweils Güter verschiedener Typen umfassen, mit einem System (1), umfassend ein Lager (2) zur Unterbringung von Gütern in Regalpositionen davon, einer Kommissionierstelle (13), Transportmitteln (5, 10) zum Transportieren von Gütern von einer Regalposition zu der Kommissionierstelle (13), einem Belademittel (12) zum Beladen eines Trägers (11) an der Kommissionierstation (13) und einem Steuermittel zum Steuern der Transportmittel (5, 10) und des Belademittels (12), umfassend die Schritte
A Bestimmen, durch ein Steuermittel, eines gewünschten räumlichen Musters, in dem die Güter durch das Belademittel auf einem Träger kommissioniert werden sollen, das gewünschte räumliche Muster umfassend Güter, die neben- und übereinander angeordnet sind,
B Bestimmen, durch das Steuermittel, einer hypothetischen Beladesequenz, in der die Güter durch das Belademittel auf den Träger (11) geladen werden können, um das gewünschte räumliche Muster zu erhalten,
C Teilen, durch das Steuermittel, von aufeinanderfolgenden Gütern innerhalb der hypothetischen Beladesequenz in aufeinanderfolgende Gruppen von Gütern, wobei zumindest eine der Gruppen Güter von verschiedenen Typen umfasst, wobei die Größe jeder Gruppe beschränkt ist, um nicht zuzulassen, dass die Hinzufügung zu der betreffenden Gruppe des nächsten Guts innerhalb der hypothetischen Beladesequenz bedeuten könnte, dass, wenn der Träger (11) durch das Belademittel gemäß dem gewünschten räumlichen Muster in zufälliger Reihenfolge mit Gütern beladen wird, die zu der betreffenden Gruppe gehören, einschließlich des nächsten Guts, zumindest ein Gut, das zu der betreffenden Gruppe gehört, durch das Belademittel (12) nicht auf den Träger (11) geladen werden kann, weil der Träger zuvor mit dem vorgenannten nächsten Gut beladen wurde,
D Steuern der Transportmittel (5, 15) mit dem Steuermittel, um die aufeinanderfolgenden Gruppen aus dem Lager (2) an die Kommissionierstelle zu liefern, wobei die Reihenfolge der Güter innerhalb der zugehörigen Gruppe bei der Ankunft an der Kommissionierstelle (13) zufällig ist, und
E Steuern des Belademittels (12) mit dem Steuermittel, um das Gut durch das Belademittel in einer automatisierten Weise in der Reihenfolge der Ankunft von Gütern an der Kommissionierstelle (13) auf einen Träger (11) zu laden, wodurch das gewünschte räumliche Muster umgesetzt wird.

2. Verfahren nach Anspruch 1, umfassend, mit Blick auf das Bestimmen, durch das Steuermittel, des gewünschten räumlichen Musters gemäß Schritt A der Schritte
A1 Bestimmen, durch das Steuermittel, von jeweiligen hypothetischen Beladesequenzen für eine Anzahl von möglichen gewünschten räumlichen Mustern,
A2 Bestimmen, durch das Steuermittel, der Anzahl von Gruppen je hypothetischer Beladesequenz für jede der jeweiligen hypothetischen Beladesequenzen,
A3 Auswählen, durch das Steuermittel, eines möglichen gewünschten räumlichen Musters, mit dem eine hypothetische Beladesequenz, die die niedrigste Anzahl von Gruppen umfasst, verbunden ist, als das gewünschte räumliche Muster.

3. Verfahren nach Anspruch 1 oder 2, umfassend, mit Blick auf das Bestimmen, durch das Steuermittel, der hypothetischen Beladesequenz gemäß Schritt B der Schritte
B1 Bestimmen, durch das Steuermittel, der Anzahl von Gruppen je jeweiliger möglicher Beladesequenz für eine Anzahl von möglichen Beladesequenzen, die jeweils zum Erhalten des gewünschten räumlichen Musters geeignet sind, und
B2 Auswählen, durch das Steuermittel, einer möglichen Beladesequenz, die die niedrigste Anzahl von Gruppen umfasst, als die hypothetische Beladesequenz.

4. Verfahren nach Anspruch 1, 2 oder 3, wobei das Belademittel (12) ein Roboter ist.

5. Verfahren nach Anspruch 4, wobei der Roboter ein Sechs-Achsen-Roboter (12) ist.

6. Verfahren nach einem der vorhergehenden Ansprüche, wobei die Güter eine Puffervorrichtung (8) zwischen dem Lager und der Kommissionierstelle während der Ausführung von Schritt D durchlaufen, wobei an der Puffervorrichtung (8) die Reihenfolge, in der die Güter aus dem Lager an die Puffervorrichtung (8) geliefert werden, durch die Puffervorrichtung (8), falls erforderlich, derart angepasst wird, dass die Güter in den aufeinanderfolgenden Gruppen, wie in Schritt C bestimmt, von der Puffervorrichtung (8) an die Kommissionierstelle (13) geliefert werden.

7. Verfahren nach einem der vorhergehenden Ansprüche, wobei das Belademittel (12) jedes Gut in horizontaler Richtung an die Position des jeweiligen Guts in dem gewünschten räumlichen Muster während der Ausführung von Schritt E bewegt.

## Revendications

1. Procédé de chargement automatique de produits à partir d'un entrepôt (2) sur un transporteur (11) conformément à des ordres de collecte comprenant chacun des produits de différents types, avec un système (1) comprenant un entrepôt (2) pour accueillir des produits dans des positions d'étagères de celui-ci, un emplacement de collecte (13), des moyens de transport (5, 10) pour transporter des produits d'une position d'étagère à l'emplacement de collecte (13), un moyen de chargement (12) pour charger un transporteur (11) au poste de collecte (13) et des moyens de commande pour commander les moyens de transport (5, 10) et le moyen de chargement (12), comprenant les étapes
A déterminer par les moyens de commande une disposition spatiale souhaitée dans laquelle les produits doivent être collectés sur un transporteur par le moyen de chargement, la disposition spatiale souhaitée comprenant des produits qui sont agencés les uns à côté et au-dessus des autres,
B déterminer par les moyens de commande une séquence de chargement hypothétique dans laquelle les produits peuvent être chargés sur le transporteur (11) par le moyen de chargement de manière à obtenir la disposition spatiale souhaitée,
C diviser par les moyens de commande des produits successifs dans la séquence de chargement hypothétique en groupes de produits successifs où au moins l'un desdits groupes comprend des produits de différents types, où la taille de chaque groupe est limitée de manière à ne pas permettre que l'addition au groupe en question du produit suivant dans la séquence de chargement hypothétique pourrait signifier que lorsque le transporteur (11) est chargé dans un ordre aléatoire avec des produits appartenant au groupe en question, comportant le produit suivant, conformément à la disposition spatiale souhaitée par le moyen de chargement, au moins un produit appartenant au groupe en question ne peut pas être chargé sur le transporteur (11) par le moyen de chargement (12) en raison du fait que le transporteur a déjà été chargé avec le produit suivant susmentionné,
D commander les moyens de transport (5, 15) avec les moyens de commande pour alimenter les groupes successifs à partir de l'entrepôt (2) jusqu'à l'emplacement de collecte, où l'ordre des produits dans le groupe associé à l'arrivée à l'emplacement de collecte (13) est aléatoire, et
E commander le moyen de chargement (12) avec les moyens de commande pour charger de manière automatique le produit sur un transporteur (11) dans l'ordre d'arrivée de produits à l'emplacement de collecte (13) par le moyen de chargement, réalisant ainsi la disposition spatiale souhaitée.

2. Procédé selon la revendication 1, comprenant, en vue de déterminer par les moyens de commande la disposition spatiale souhaitée selon l'étape A, les étapes
A1 déterminer par les moyens de commande des séquences de chargement hypothétiques respectives pour un certain nombre de dispositions spatiales souhaitées possibles,
A2 déterminer par les moyens de commande le nombre de groupes par séquence de chargement hypothétique pour chacune des séquences de chargement hypothétiques respectives,
A3 sélectionner par les moyens de commande une disposition spatiale souhaitée possible à laquelle une séquence de chargement hypothétique comprenant le plus petit nombre de groupes est associée comme étant la disposition spatiale souhaitée.

3. Procédé selon la revendication 1 ou 2, comprenant, en vue de déterminer par les moyens de commande la séquence de chargement hypothétique selon l'étape B, les étapes
B1 déterminer par les moyens de commande le nombre de groupes par séquence de chargement possible respective pour un certain nombre de séquences de chargement possibles qui sont chacune appropriées pour obtenir la disposition spatiale souhaitée, et
B2 sélectionner par les moyens de commande une séquence de chargement possible comprenant le plus petit nombre de groupes comme étant la séquence de chargement hypothétique.

4. Procédé selon la revendication 1, 2 ou 3, dans lequel le moyen de chargement (12) est un robot.

5. Procédé selon la revendication 4, dans lequel le robot est un robot à six axes (12).

6. Procédé selon l'une quelconque des revendications précédentes, dans lequel les produits passent par un dispositif tampon (8) entre l'entrepôt et l'emplacement de collecte lors de l'exécution de l'étape D, à ce dispositif tampon (8) l'ordre dans lequel les produits sont fournis à partir de l'entrepôt au dispositif tampon (8) est adapté par le dispositif tampon (8), si nécessaire, de sorte que les produits dans les groupes successifs tels que déterminés à l'étape C soient fournis à partir du dispositif tampon (8) à l'emplacement de collecte (13).

7. Procédé selon l'une quelconque des revendications précédentes, dans lequel le moyen de chargement (12) déplace chaque produit dans une direction horizontale jusqu'à la position du produit respectif dans la disposition spatiale souhaitée lors de l'exécution de l'étape E.
